(19) Europäisches Patentamt
European Patent Office
Office européen des brevets

(11) **EP 2 300 063 B1**

(12) **EUROPÄISCHE PATENTSCHRIFT**

(45) Veröffentlichungstag und Bekanntmachung des Hinweises auf die Patenterteilung:
**16.10.2013   Patentblatt 2013/42**

(21) Anmeldenummer: **09780135.1**

(22) Anmeldetag: **03.07.2009**

(51) Int Cl.:
*A61L 15/60* (2006.01)          *C08F 8/14* (2006.01)
*C08J 3/12* (2006.01)          *C08J 3/24* (2006.01)

(86) Internationale Anmeldenummer:
**PCT/EP2009/058414**

(87) Internationale Veröffentlichungsnummer:
**WO 2010/003897 (14.01.2010 Gazette 2010/02)**

(54) **VERFAHREN ZUR OBERFLÄCHENNACHVERNETZUNG WASSERABSORBIERENDER POLYMERPARTIKEL**

METHOD FOR POST-CROSSLINKING OF THE SURFACE OF WATER-ABSORBING POLYMER PARTICLES

PROCÉDÉ DE POST-RÉTICULATION DE SURFACE DE PARTICULES DE POLYMÈRE HYDROPHILES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.07.2008   EP 08160007**

(43) Veröffentlichungstag der Anmeldung:
**30.03.2011   Patentblatt 2011/13**

(73) Patentinhaber: **BASF SE**
**67056 Ludwigshafen (DE)**

(72) Erfinder:
• **BLEI, Stefan**
  **68163 Mannheim (DE)**
• **KRÜGER, Marco**
  **68219 Mannheim (DE)**
• **HEIDE, Wilfried**
  **67251 Freinsheim (DE)**
• **WEISMANTEL, Matthias**
  **63637 Jossgrund (DE)**
• **STUEVEN, Uwe**
  **65812 Bad Soden (DE)**

(56) Entgegenhaltungen:
**WO-A1-2004/018006**

EP 2 300 063 B1

**Beschreibung**

Die vorliegende Erfindung betrifft ein Verfahren zur thermischen Oberflächennachvernetzung wasserabsorbierender Polymerpartikel in einer mittels eines Trägergases erzeugten Wirbelschicht, wobei der Oberflächennachvernetzer der Wirbelschicht gasförmig zugeführt wird.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymere werden auch als Superabsorber bezeichnet.

Die Eigenschaften der wasserabsorbierenden Polymere können über den Vernetzungsgrad eingestellt werden. Mit steigendem Vernetzungsgrad steigt die Gelfestigkeit und sinkt die Zentrifugenretentionskapazität (CRC).

Zur Verbesserung der Anwendungseigenschaften, wie beispielsweise Permeabilität des gequollenen Gelbetts (SFC) in der Windel und Absorption unter einem Druck von 49.2 $g/cm^2$ (AUL0.7psi), werden wasserabsorbierende Polymerpartikel im allgemeinen oberflächennachvernetzt. Dadurch steigt der Vernetzungsgrad der Partikeloberfläche, wodurch die Absorption unter einem Druck von 49, 2 $g/cm^2$ (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet, thermisch oberflächennachvernetzt und getrocknet. Dazu geeignete Vernetzer sind Verbindungen, die mindestens zwei Gruppen enthalten, die mit den Carboxylatgruppen der wasserabsorbierenden Polymere kovalente Bindungen bilden können.

WO 00/053664 A1 beschreibt beispielsweise in den Beispielen 15 bis 17 eine Oberflächennachvernetzung, wobei wasserabsorbierende Polymerpartikel in einem Schaufeltrockner mit einer wässrigen Oberflächennachvernetzerlösung beschichtet, die beschichteten Polymerpartikel in einem Scheibentrockner thermisch oberflächennachvernetzt und die oberflächennachvernetzten Polymerpartikel mittels Luft in einer Wirbelschicht abgekühlt werden.

Aufgabe der vorliegenden Erfindung war die Bereitstellung eines verbesserten Verfahrens zur Oberflächennachvernetzung wasserabsorbierender Polymerpartikel.

Gelöst wurde die Aufgabe durch ein Verfahren zur thermischen Oberflächennachvernetzung wasserabsorbierender Polymerpartikel in einer mittels eines Trägergases erzeugten Wirbelschicht, dadurch gekennzeichnet, dass mindestens ein Oberflächennachvernetzer der Wirbelschicht gasförmig zugeführt wird.

Die wasserabsorbierenden Polymerpartikel werden beispielsweise durch Polymerisation einer Monomerlösung, enthaltend

a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,

hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Weitere geeignete Monomere a) sind beispielsweise ethylenisch ungesättigte Sulfonsäuren, wie Styrolsulfonsäure und 2- Acrylamido- 2- methylpropansulfonsäure (AMPS) .

Die Säuregruppen der Monomere a) sind üblicherweise teilweise neutralisiert. Dazu wird das Neutralisationsmittel als wässrige Lösung oder bevorzugt auch als Feststoff in die Monomerlösung eingemischt. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 $g/cm^2$ (AUL0.3psi) durchläuft ein Maximum.

Als Initiatoren c) können sämtliche unter den Polymerisationsbedingungen in Radikale erzeugende Verbindungen eingesetzt werden, beispielsweise thermische Initiatoren, Redox- Initiatoren, Photoinitiatoren. Geeignete Redox-Initiatoren sind Natriumperoxodisulfat/ Ascorbinsäure, Wasserstoffperoxid/ Ascorbinsäure, Natriumperoxodisulfat/ Natriumbisulfit und Wasserstoffperoxid/ Natriumbisulfit. Vorzugsweise werden Mischungen aus thermischen Initiatoren und Redox- Initiatoren eingesetzt, wie Natriumperoxodisulfat/ Wasserstoffperoxid/ Ascorbinsäure. Als reduzierende Komponente wird aber vorzugsweise ein Gemisch aus dem Natriumsalz der 2- Hydroxy- 2- sulfinatoessigsäure, dem Dinatriumsalz der 2- Hydroxy- 2- sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat und Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren (Gelpolymerisation). Im Kneter wird das bei der Polymerisation einer wässrigen Monomerlösung entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Bei Verwendung von Knetreaktoren oder Bandreaktoren ist es möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das erhaltene Polymergel wird vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA (European Disposables and Nonwovens Association) empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur $T_g$ auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 $\mu$m, besonders bevorzugt von 250 bis 600 $\mu$m, ganz besonders von 300 bis 500 $\mu$m. Die mittlere Partikelgröße der Produktfraktion kann mittels der von der EDANA (European Disposables and Nonwovens Association) empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 $\mu$m beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 $\mu$m, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Es ist aber auch möglich eine wässrige Monomerlösung zu vertropfen und die erzeugten Tropfen in einem erwärmten Trägergasstrom zu polymerisieren (Vertropfungspolymerisation). Hierbei können die Verfahrensschritte Polymerisation und Trocknung zusammengefasst werden, sowie die Verfahrensschritte Zerkleinerung und Klassierung entfallen, wie in WO 2008/040715 A2 und WO 2008/052971 A1 beschrieben. Die Monomerlösung wird hierzu mittels mindestens einer Bohrung unter Ausbildung von Tropfen in den Reaktionsraum dosiert. Die Bohrungen können sich beispielsweise in einer Vertropferplatte befinden.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird. In einer bevorzugten Ausführungsform wird die Vertropferplatte nicht angeregt.

Die Anzahl und die Größe der Bohrungen werden gemäß der gewünschten Kapazität und Tropfengröße ausgewählt. Der Tropfendurchmesser beträgt dabei üblicherweise das 1,9-fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Die Reynoldszahl bezogen auf den Durchsatz pro Bohrung und den Bohrungsdurchmesser ist vorzugsweise kleiner als 2.000, bevorzugt kleiner 1.000, besonders bevorzugt kleiner 500, ganz besonders bevorzugt kleiner 250.

Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der so genannten Dreiecksteilung, d.h. jeweils drei Bohrungen bilden die Ecken eines gleichseitigen Dreiecks.

Der Abstand der Bohrungen beträgt vorzugsweise 1 bis 50 mm, besonders bevorzugt 2,5 bis 20 mm, ganz besonders bevorzugt 5 bis 10 mm.

Der Polymerisationsreaktor wird von einem Trägergas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von unten nach oben. Vorzugsweise wird das Trägergas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1%.

Der Sauerstoffgehalt des Trägergases beträgt vorzugsweise von 0,5 bis 15 Vol.-%, besonders bevorzugt von 1 bis 10 Vol.-%, ganz besonders bevorzugt von 2 bis 5 Gew.-%.

Das Trägergas enthält neben Sauerstoff vorzugsweise Stickstoff. Der Stickstoffgehalt des Trägergases beträgt vorzugsweise mindestens 80 Vol.-%, besonders bevorzugt mindesten 90 Vol.-%, ganz besonders bevorzugt mindestens 93 Vol.-%.

Die Gasgeschwindigkeit wird vorzugsweise so eingestellt, dass die Strömung im Polymerisationsreaktor gerichtet ist, beispielsweise liegen keine der allgemeinen Strömungsrichtung entgegen gesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Trägergas wird zweckmäßigerweise vor dem Reaktor auf die Reaktionstemperatur vorgewärmt.

Die Gaseingangstemperatur, d.h. die Temperatur mit der das Trägergas in den Reaktionsraum eintritt, beträgt vorzugsweise von 160 bis 250°C, besonders bevorzugt von 180 bis 230°C, ganz besonders bevorzugt von 190 bis 220°C.

Vorteilhaft wird die Gaseintrittstemperatur so geregelt, dass die Gasaustrittstemperatur, d.h. die Temperatur mit der das Trägergas den Reaktionsraum verlässt von 100 bis 180°C, besonders bevorzugt von 110 bis 160°C, ganz besonders bevorzugt von 120 bis 140°C, beträgt.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Trägergas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Die beispielsweise durch Gelpolymerisation oder Vertropfungspolymerisation erhaltenen wasserabsorbierenden Polymerpartikel werden anschließend gemäß dem erfindungsgemäßen Verfahren oberflächennachvernetzt.

Dazu werden die wasserabsorbierenden Polymerpartikel mittels eines Trägergases in einem Wirbelbettreaktor fluidisiert.

Der Sauerstoffgehalt des Trägergases beträgt vorzugsweise weniger als 5 Vol.-%. Durch den niedrigen Sauerstoffgehalt werden zündfähige Gemische im Reaktor vermieden.

Das Trägergas enthält vorzugsweise Stickstoff. Der Stickstoffgehalt des Trägergases beträgt vorzugsweise mindestens 80 Vol.-%, besonders bevorzugt mindesten 90 Vol.-%, ganz besonders bevorzugt mindestens 95 Vol.-%.

Wichtig ist, dass der Oberflächennachvernetzer gasförmig in den Reaktor dosiert wird. Dazu kann eine entsprechende Menge verdampft und gasförmig in den Reaktor eingeleitet werden. Es ist aber auch möglich das Trägergas vor dem Reaktor mit einer entsprechenden Menge an Oberflächennachvernetzer zu beladen. Hierzu sind beispielsweise temperierte mit dem Oberflächennachvernetzer gefüllte Gaswäscher geeignet.

Die gasförmige Dosierung ermöglicht eine schonende und sehr gleichmäßige Oberflächennachvernetzung. Die sonst übliche Verwendung wässriger Lösungen mit der damit einhergehenden Verklumpungsneigung entfällt.

Die einsetzbaren Oberflächennachvernetzer unterliegen keinen Beschränkungen. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Bevorzugte Oberflächennachvernetzer sind difunktionelle Alkohole (Diole), wie Ethylenglykol, Propylenglykol, 1, 3- Propandiol, 1, 2- Butandiol, 1, 3- Butandiol, 2, 3- Butandiol und 1, 4- Butandiol.

Ganz besonders bevorzugte Oberflächennachvernetzer sind Propylenglykol und 2,3-Butandiol.

Die Oberflächennachvernetzer sollten aber einen bei Reaktionstemperatur ausreichend hohen Dampfdruck aufweisen. Bei einem zu niedrigen Dampfdruck kann der Oberflächennachvernetzer nur langsam dosiert werden und das Verfahren wird aufgrund der notwendigen langen Verweilzeiten unwirtschaftlich. Dies beruht darauf, dass der Partialdruck des Oberflächennachvernetzers im Trägergas nie höher sein kann als der Dampfdruck. Bei zu hohen Partialdrücken des Oberflächennachvernetzers neigen die wasserabsorbierenden Polymerpartikel auch in Abwesenheit eines Lösungsmittels zum Verklumpen.

Der Partialdruck des Oberflächennachvernetzers im Trägergas der Wirbelschicht beträgt vorzugsweise 5 bis 200 mbar, besonders bevorzugt 10 bis 100 mbar, ganz besonders bevorzugt 15 bis 50 mbar.

Die Reaktionstemperaturen liegen im Bereich von vorzugsweise 150 bis 250°C, bevorzugt besonders bevorzugt 155 bis 220°C, ganz besonders bevorzugt 160 bis 200°C. Die bevorzugte Verweilzeit der wasserabsorbierenden Polymerpartikel in der Wirbelschicht beträgt vorzugsweise mindestens 10 Minuten, besonders bevorzugt mindestens 20 Minuten, ganz besonders bevorzugt mindestens 30 Minuten, und üblicherweise höchstens 120 Minuten.

Das Reaktionsabgas der Oberflächennachvernetzung, d.h., dass die Wirbelschicht verlassende Trägergas, kann zumindest teilweise als Kreisgas in die Oberflächennachvernetzung zurückgeführt werden. Ein Teil des Reaktionsabgases kann ausgeschleust und durch frisches Trägergas ersetzt werden, wobei im Reaktionsabgas enthaltener Oberflächennachvernetzer abgetrennt und rückgeführt werden kann.

Die oberflächennachvernetzten Polymerpartikel können zur weiteren Verbesserung der Eigenschaften beschichtet oder nachbefeuchtet werden. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen, beispielsweise Aluminiumkationen als wässrige Aluminiumlaktat- oder Aluminiumsulfatlösung. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA (European Disposables and Nonwovens Association) empfohlener Testmethode Nr. WSP 241.2-05 "Centrifuge Retention Capacity" bestimmt.

Die gemäß dem erfindungsgemäßen Verfahren hergestellten wasserabsorbierenden Polymerpartikel weisen eine Absorption unter einem Druck von 49,2 $g/cm^2$ (AUL0.7psi) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 $g/cm^2$ (AUL0.7psi) der wasserabsorbierenden Polymerpartikel beträgt üblicherweise weniger als 35 g/g. Die Absorption unter einem Druck von 49,2 $g/cm^2$ (AUL0.7psi) wird analog der von der EDANA (European Disposables and Nonwovens Association) empfohlenen Testmethode Nr. WSP 242.2-05 "Absorption Under Pressure" bestimmt, wobei statt eines Drucks von 21,0 $g/cm^2$ (AUL0.3psi) ein Druck von 49,2 $g/cm^2$ (AUL0.7psi) eingestellt wird.

Die wasserabsorbierenden Polymerpartikel werden mittels der nachfolgend beschriebenen Testmethoden geprüft.

Methoden:

Die Messungen sollten, wenn nicht anders angegeben, bei einer Umgebungstemperatur von 23 $\pm$ 2 °C und einer relativen Luftfeuchte von 50 $\pm$ 10 % durchgeführt werden. Die wasserabsorbierenden Polymerpartikel werden vor der Messung gut durchmischt.

Permeabilität (Saline Flow Conductivity)

Die Permeabilität des gequollenen Gelbetts (SFC) unter Druckbelastung von 21,0 $g/cm^2$ wird, wie in EP 0 640 330 A1 beschrieben, als Gel-Layer-Permeability einer gequollenen Gelschicht aus wasserabsorbierenden Polymerpartikeln bestimmt, wobei die in zuvor genannter Patentanmeldung auf Seite 19 und in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP 0 640 330 A1. Der Durchfluss wird automatisch erfasst.

Die Flüssigkeitsweiterleitung (SFC) wird wie folgt berechnet:

$$\text{SFC } [cm^3 s/g] = (Fg_{(t=0)} x L_0)/(d x A x WP),$$

wobei $Fg_{(t=0)}$ der Durchfluss an NaCl-Lösung in g/s ist, der anhand einer linearen Regressionsanalyse der Daten $Fg_{(t)}$ der Durchflussbestimmungen durch Extrapolation gegen t=0 erhalten wird, $L_0$ die Dicke der Gelschicht in cm, d die Dichte der NaCl-Lösung in $g/cm^3$, A die Fläche der Gelschicht in $cm^2$ und WP der hydrostatische Druck über der Gelschicht in $dyn/cm^2$ darstellt.

Feuchtegehalt (Moisture Content)

Der Feuchtegehalt der wasserabsorbierenden Polymerpartikel wird gemäß der von der EDANA (European Disposables and Nonwovens Association) empfohlenen Testmethode Nr. WSP 230.2-05 "Moisture content" bestimmt.

Zentrifugenretentionskapazität (Centrifuge Retention Capacity)

Die Zentrifugenretentionskapazität (CRC) wird gemäß der von der EDANA (European Disposables and Nonwovens Association) empfohlenen Testmethode Nr. WSP 241.2-05 "Centrifuge Retention Capacity" bestimmt.

Absorption unter einem Druck von 49,2 $g/cm^2$ (Absorption under Pressure)

Die Absorption unter einem Druck von 49,2 $g/cm^2$ (AUL0.7psi) wird analog der von der EDANA (European Disposables and Nonwovens Association) empfohlenen Testmethode Nr. WSP 242.2-05 "Absorption under Pressure" bestimmt, wobei statt eines Drucks von 21,0 $g/cm^2$ (AUL0.3psi) ein Druck von 49,2 $g/cm^2$ (AUL0.7psi) eingestellt wird.

Extrahierbare (Extractables)

Die Extrahierbaren werden gemäß der von der EDANA (European Disposables and Nonwovens Association) empfohlenen Testmethode Nr. WSP 270.2-05 "Extractables" bestimmt.

Die EDANA-Testmethoden sind beispielsweise erhältlich bei der European Disposables and Nonwovens Association, Avenue Eugène Plasky 157, B-1030 Brüssel, Belgien.

Beispiele:

Beispiel 1

Eine Monomerlösung, enthaltend 31, 6 Gew.- % Natriumacrylat, 9, 9 Gew.- % Acrylsäure, 0, 17 Gew.- % 2, 2'- Azobis [2- (2- imidazolin- 2- yl) propan] dihydrochlorid, 0, 085 Gew.- % Natriumperoxodisulfat, 0, 058 Gew.- % 3-fach ethoxiliertes Glyzerintriacrylat (ca. 85 gew.- %ig) und Wasser, wurde in einen erwärmten Vertropfungsturm vertropft (12m Höhe, 2m Breite, Gasgeschwindigkeit 0, 1 m/s im Gleichstrom) . Die Monomerlösung  hatte bei 20°C eine dynamische Viskosität von 0, 0065 Pa·s, eine Dichte von 1, 1 g/cm$^3$ und eine Oberflächenspannung von 0, 039 N/m. Die Vertropferplatte hatte 30 Bohrungen ä 170 $\mu$m. Die Dosiergeschwindigkeit der Mischung betrug 16, 0 kg/h. Die Heizleistung der Gasvorwärmung wurde so geregelt, dass die Gasausgangstemperatur im Vertropfungsturm konstant 130°C betrug.

Die erhaltenen wasserabsorbierenden Polymerpartikel hatten eine Zentrifugenretentionskapazität (CRC) von 30,5 g/g, eine Absorption unter einem Druck von 49,2 g/cm$^2$ (AUL0.7psi) von 20,7 g/g, eine Permeabilität (SFC) von 11x10$^{-7}$ cm$^3$s/g, einen Feuchtegehalt von 12,6 Gew.-% und einen Anteil an Extrahierbaren von 2,2 Gew.-%.

Beispiel 2

Es wurde verfahren wie unter Beispiel 1. Die Konzentration an 3-fach ethoxiliertem Glyzerintriacrylat in der Monomerlösung wurde auf 0,018 Gew.-% gesenkt.

Die erhaltenen wasserabsorbierenden Polymerpartikel hatten eine Zentrifugenretentionskapazität (CRC) von 53,4 g/g, eine Absorption unter einem Druck von 49,2 g/cm$^2$ (AUL0.7psi) von 7,7 g/g, eine Permeabilität (SFC) von 0x10$^{-7}$ cm$^3$s/g, einen Feuchtegehalt von 15,6 Gew.-% und einen Anteil an Extrahierbaren von 6,7 Gew.-%.

Beispiel 3

In einem Wirbelbettreaktor mit einem Innendurchmesser von 7 cm wurden ca. 100 g wasserabsorbierende Polymerpartikel aus Beispiel 1 vorgelegt. Die Leerrohrgeschwindigkeit des Trägergases im Reaktor betrug 1 m/s. Als Trägergas wurde technischer Stickstoff mit einer Temperatur von 160°C eingesetzt. Die wasserabsorbierenden Polymerpartikel wurden 10 Minuten im Reaktor getrocknet. Anschließend wurde das Trägergas vor dem Reaktor bei 160°C mit 1,2-Propandiol beladen (t=0). Der Partialdruck von 1,2-Propandiol im Trägergas betrug ca. 20 mbar.

Die erhaltenen wasserabsorbierenden Polymerpartikel wurden analysiert:

| Zeit [Minuten] | CRC[g/g] | AUL0.7psi [g/g] | Extrahierbare [Gew.-%] | SFC [x10$^{-7}$ cm$^3$s/g] |
|---|---|---|---|---|
| 0 | 30,1 | 19,7 | 3,1 | 9 |
| 15 | 31,5 | 23,7 | 3,1 | 16 |
| 30 | 29,4 | 23,3 | 2,4 | 38 |
| 45 | 27,3 | 21,9 | 3,1 | 50 |

Beispiel 4

Es wurde verfahren wie unter Beispiel 3. Die Trägergastemperatur wurde auf 180°C angehoben und als Oberflächennachvernetzer wurde 2,3-Butandiol eingesetzt.

Die erhaltenen wasserabsorbierenden Polymerpartikel wurden analysiert:

| Zeit [Minuten] | CRC[g/g] | AUL0.7psi [g/g] | Extrahierbare [Gew.-%] | SFC [x10$^{-7}$ cm$^3$s/g] |
|---|---|---|---|---|
| 0 | 30,1 | 19,7 | 3,1 | 9 |
| 15 | 29,8 | 21,8 | 3,3 | 20 |
| 30 | 28,7 | 22,7 | 2,9 | 38 |

(fortgesetzt)

| Zeit [Minuten] | CRC[g/g] | AUL0.7psi [g/g] | Extrahierbare [Gew.-%] | SFC [x10$^{-7}$ cm$^3$s/g] |
|---|---|---|---|---|
| 45 | 28,3 | 21,6 | 2,5 | 48 |
| 60 | 26,9 | 21,5 | 2,6 | 55 |

Beispiel 5

Es wurde verfahren wie unter Beispiel 3. Es wurden wasserabsorbierende Polymerpartikel aus Beispiel 2 eingesetzt.

Die erhaltenen wasserabsorbierenden Polymerpartikel wurden analysiert:

| Zeit [Minuten] | CRC[g/g] | AUL0.7psi [g/g] | SFC [x10$^{-7}$ cm$^3$s/g] |
|---|---|---|---|
| 0 | 53,9 | 8,4 | 0 |
| 15 | 55,2 | 13,2 | 0 |
| 30 | 44,4 | 25,6 | 1 |
| 45 | 39,1 | 26,1 | 5 |

Beispiel 6

Es wurde verfahren wie unter Beispiel 5. Die Trägergastemperatur wurde auf 180°C angehoben.

Die erhaltenen wasserabsorbierenden Polymerpartikel wurden analysiert:

| Zeit [Minuten] | CRC[g/g] | AUL0.7psi [g/g] | SFC [x10$^{-7}$ cm$^3$s/g] |
|---|---|---|---|
| 0 | 53,9 | 8,4 | 0 |
| 15 | 32,3 | 23,6 | 8 |
| 30 | 27,2 | 21,5 | 23 |

**Patentansprüche**

1.   Verfahren zur thermischen Oberflächennachvernetzung wasserabsorbierender Polymerpartikel in einer mittels eines Trägergases erzeugten Wirbelschicht, **dadurch gekennzeichnet, dass** mindestens ein Oberflächennachvernetzer der Wirbelschicht gasförmig zugeführt wird.

2.   Verfahren gemäß Anspruch 1, **dadurch gekennzeichnet, dass** der Partialdruck des Oberflächennachvernetzers im Trägergas der Wirbelschicht mindestens 5 mbar beträgt.

3.   Verfahren gemäß Anspruch 1 oder 2, **dadurch gekennzeichnet, dass** die Oberflächennachvernetzung bei einer Reaktionstemperatur von mindestens 150°C durchgeführt wird.

4.   Verfahren gemäß einem der Ansprüche 1 bis 3, **dadurch gekennzeichnet, dass** die Verweilzeit der wasserabsorbierenden Polymerpartikel in der Wirbelschicht mindestens 10 Minuten beträgt.

5.   Verfahren gemäß einem der Ansprüche 1 bis 4, **dadurch gekennzeichnet, dass** der Oberflächennachvernetzer ein Diol ist.

6.   Verfahren gemäß einem der Ansprüche 1 bis 5, **dadurch gekennzeichnet, dass** der Oberflächennachvernetzer 1,2-Propandiol und/oder 2,3-Butandiol ist.

7.   Verfahren gemäß einem der Ansprüche 1 bis 6, **dadurch gekennzeichnet, dass** das Trägergas der Wirbelschicht zu mindestens 80 Vol.-% Stickstoff ist.

8. Verfahren gemäß einem der Ansprüche 1 bis 7, **dadurch gekennzeichnet, dass** die wasserabsorbierenden Polymerpartikel durch Polymerisation einer Monomerlösung, enthaltend

a) mindestens ein ethylenisch ungesättigtes, säuregruppentragendes Monomer, das zumindest teilweise neutralisiert sein kann,
b) mindestens einen Vernetzer,
c) mindestens einen Initiator und
d) optional ein oder mehrere mit den unter a) genannten Monomeren copolymerisierbare ethylenisch ungesättigte Monomere und
e) optional ein oder mehrere wasserlösliche Polymere,

erhalten werden.

9. Verfahren gemäß einem der Ansprüche 1 bis 8, **dadurch gekennzeichnet, dass** Monomer a) teilweise neutralisierte Acrylsäure ist.

10. Verfahren gemäß einem der Ansprüche 1 bis 9, **dadurch gekennzeichnet, dass** die wasserabsorbierenden Polymerpartikel eine Zentrifugenretentionskapazität von mindesten 15 g/g aufweisen.

## Claims

1. A process for thermally surface postcrosslinking water-absorbing polymer particles in a fluidized bed generated by means of a carrier gas, which comprises supplying at least one surface postcrosslinker to the fluidized bed in gaseous form.

2. The process according to claim 1, wherein the partial pressure of the surface postcrosslinker in the carrier gas of the fluidized bed is at least 5 mbar.

3. The process according to claim 1 or 2, wherein the surface postcrosslinking is performed at a reaction temperature of at least 150°C.

4. The process according to any one of claims 1 to 3, wherein the residence time of the water-absorbing polymer particles in the fluidized bed is at least 10 minutes.

5. The process according to any one of claims 1 to 4, wherein the surface postcrosslinker is a diol.

6. The process according to any one of claims 1 to 5, wherein the surface postcrosslinker is 1,2-propanediol and/or 2,3-butanediol.

7. The process according to any one of claims 1 to 6, wherein at least 80% by volume of the carrier gas of the fluidized bed is nitrogen.

8. The process according to any one of claims 1 to 7, wherein the water-absorbing polymer particles are obtained by polymerizing a monomer solution comprising

a) at least one ethylenically unsaturated monomer which bears acid groups and may be at least partially neutralized,
at least one crosslinker,
at least one initiator and
optionally one or more ethylenically unsaturated monomers copolymerizable with the monomers mentioned under a) and
optionally one or more water-soluble polymers.

9. The process according to any one of claims 1 to 8, wherein the monomer a) is partially neutralized acrylic acid.

10. The process according to any one of claims 1 to 9, wherein the water-absorbing polymer particles have a centrifuge retention capacity of at least 15 g/g.

**Revendications**

1. Procédé de post-réticulation de surface thermique de particules polymères absorbant l'eau dans un lit fluidisé généré par un gaz vecteur, **caractérisé en ce qu'**au moins un agent de post-réticulation de surface est introduit sous forme gazeuse dans le lit fluidisé.

2. Procédé selon la revendication 1, **caractérisé en ce que** la pression partielle de l'agent de post-réticulation de surface dans le gaz vecteur du lit fluidisé est d'au moins 5 mbar.

3. Procédé selon la revendication 1 ou 2, **caractérisé en ce que** la post-réticulation de surface est réalisée à une température de réaction d'au moins 150 °C.

4. Procédé selon l'une quelconque des revendications 1 à 3, **caractérisé en ce que** le temps de séjour des particules polymères absorbant l'eau dans le lit fluidisé est d'au moins 10 minutes.

5. Procédé selon l'une quelconque des revendications 1 à 4, **caractérisé en ce que** l'agent de post-réticulation de surface est un diol.

6. Procédé selon l'une quelconque des revendications 1 à 5, **caractérisé en ce que** l'agent de post-réticulation de surface est le 1,2-propanediol et/ou le 2,3-butanediol.

7. Procédé selon l'une quelconque des revendications 1 à 6, **caractérisé en ce que** le gaz vecteur du lit fluidisé est constitué à au moins 80 % en volume d'azote.

8. Procédé selon l'une quelconque des revendications 1 à 7, **caractérisé en ce que** les particules polymères absorbant l'eau sont obtenues par polymérisation d'une solution de monomères contenant :

   a) au moins un monomère éthyléniquement insaturé, portant des groupes acides, qui peut être neutralisé au moins en partie,
   b) au moins un agent de réticulation,
   c) au moins un initiateur et
   d) éventuellement un ou plusieurs monomères éthyléniquement insaturés copolymérisables avec les monomères cités en a), et
   e) éventuellement un ou plusieurs polymères solubles dans l'eau.

9. Procédé selon l'une quelconque des revendications 1 à 8, **caractérisé en ce que** le monomère a) est l'acide acrylique partiellement neutralisé.

10. Procédé selon l'une quelconque des revendications 1 à 9, **caractérisé en ce que** les particules polymères absorbant l'eau présentent une capacité de rétention centrifuge d'au moins 15 g/g.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 00053664 A1
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1

- WO 9015830 A1
- WO 2002032962 A2
- WO 2001038402 A1
- DE 3825366 A1
- US 6241928 B
- WO 2008040715 A2
- WO 2008052971 A1
- EP 0083022 A2
- EP 0543303 A1
- EP 0937736 A2
- DE 3314019 A1
- DE 3523617 A1
- EP 0450922 A2
- DE 10204938 A1
- US 6239230 B
- EP 0640330 A1

**In der Beschreibung aufgeführte Nicht-Patentliteratur**

- **F.L. BUCHHOLZ ; A.T. GRAHAM.** Modern Super-absorbent Polymer Technology. Wiley-VCH, 1998, 71-103